# EUROPÄISCHE PATENTANMELDUNG

(11) **EP 2 221 735 A2**
(43) Veröffentlichungstag der Anmeldung: **25.08.2010**
(21) Anmeldenummer: 10000570.1
(22) Anmeldetag: 21.01.2010
(51) Int. Cl.: G06F 17/30

(54) **Verfahren zum automatischen Klassifizieren eines Textes durch ein Computersystem**

(30) Priorität: 30.01.2009 DE 102009006857
(71) Anmelder: living-e AG, 76133 Karlsruhe (DE)
(72) Erfinder: Konrad, Karsten, Dr.-Ing., 66121 Saarbrücken (DE)
(74) Vertreter: Schäfer, Wolfgang

(57) **Zusammenfassung**

Es wird ein Verfahren zum automatischen Klassifizieren eines Textes, der in einer eingehenden elektronischen Information enthalten ist, beschrieben. Es wird mindestens eine qualitative Eigenschaft mindestens eines Wortes des zu klassifizierenden Textes ermittelt und es wird die Häufigkeit des Vorkommens der qualitativen Eigenschaft in dem zu klassifizierenden Text ermittelt. Es wird der zu klassifizierende Text in eine Abfolge alphanumerischer Zeichen umgewandelt, es wird die Abfolge alphanumerischer Zeichen auf mindestens eine vorgegebene Weise in eine sogenannte Zeichen-Schindel zerlegt und es wird die Häufigkeit des Vorkommens der Zeichen-Schindel in dem zu klassifizierenden Text ermittelt. Aus der qualitativen Eigenschaft und der zugehörigen Häufigkeit sowie aus der Zeichen-Schindel und der zugehörigen Häufigkeit wird ein Vektor gebildet. Der ermittelte Vektor wird mit vorab anhand von bekannten Beispieltexten auf gleiche Weise ermittelten Vektoren verglichen, wobei jeder der Beispieltexte einer Klasse zugeordnet ist. Der zu klassifizierende Text wird in Abhängigkeit von dem Vergleich einer derjenigen Klassen zugeordnet, der die Beispieltexte zugeordnet sind.

## Beschreibung

Die Erfindung betrifft ein Verfahren zum automatischen Klassifizieren eines Textes durch ein Computersystem. Die Erfindung betrifft ebenfalls ein Computerprogramm, ein Computerprogramm-Produkt und ein Computersystem zum automatischen Klassifizieren eines Textes.

Aus der DE 102 10 553 B4 ist es bekannt, Texte wie folgt zu klassifizieren: Es werden eine Mehrzahl von Beispieltexten ausgewählt, die mit den erwarteten, zu klassifizierenden Texten thematisch übereinstimmen. Es werden Klassen bestimmt und es werden die Beispieltexte diesen Klassen zugeteilt. Dann wird für jeden Beispieltext eine Tabelle bzw. ein Vektor erzeugt, indem die Häufigkeiten des Vorkommens bestimmter qualitativer Eigenschaften einzelner Wörter des zu klassifizierenden Textes ermittelt werden. Die qualitativen Eigenschaften und die zugehörige Häufigkeiten des Vorkommens in dem jeweiligen Text werden in der Tabelle bzw. dem Vektor abgespeichert. Ein zu klassifizierender Text wird auf dieselbe Weise bearbeitet. Dann wird die Tabelle bzw. der Vektor des zu klassifizierenden Textes mit den Tabellen bzw. Vektoren der Beispieltexte verglichen. Dem zu klassifizierenden Text wird diejenige Klasse zugeteilt, die derjenige Beispieltext besitzt, dessen Tabelle bzw. Vektor am ähnlichsten ist zu der Tabelle bzw. dem Vektor des zu klassifizierenden Textes.

Bei Texten, die in elektronischen Informationen enthalten sind, also insbesondere bei Emails, sind häufig Schreibfehler oder Schreibvarianten enthalten. So wird beispielsweise der Begriff "Grafikkarte" im Fach-Jargon häufig als "Graka" abgekürzt oder es werden gerade im Zusammenhang mit Computer-Produkten häufig englischsprachige Wörter verwendet, wie beispielsweise "Bluescreen" bzw. "blue screen". Derartige Schreibfehler oder Schreibvarianten können zu fehlerhaften Klassifikationen einer eingehenden Email führen.

Aufgabe der Erfindung ist es, das bekannte Verfahren zum automatischen Klassifizieren eines Textes durch ein Computersystem zu verbessern.

Die Erfindung löst diese Aufgabe durch ein Verfahren zum automatischen Klassifizieren eines Textes, das sich aus zwei Teilen zusammensetzt. In einem ersten Teil wird mindestens eine qualitative Eigenschaft mindestens eines Wortes des zu klassifizierenden Textes ermittelt und es wird die Häufigkeit des Vorkommens der qualitativen Eigenschaft in dem zu klassifizierenden Text ermittelt. In einem zweiten Teil wird der zu klassifizierende Text in eine Abfolge alphanumerischer Zeichen umgewandelt, es wird die Abfolge alphanumerischer Zeichen auf mindestens eine vorgegebene Weise in eine sogenannte Zeichen-Schindel zerlegt und es wird die Häufigkeit des Vorkommens der Zeichen-Schindel in dem zu klassifizierenden Text ermittelt. Aus der qualitativen Eigenschaft und der zugehörigen Häufigkeit sowie aus der Zeichen-Schindel und der zugehörigen Häufigkeit wird dann ein Vektor gebildet. Der ermittelte Vektor wird mit vorab anhand von bekannten Beispieltexten auf gleiche Weise ermittelten Vektoren verglichen, wobei jeder der Beispieltexte einer Klasse zugeordnet ist, und der zu klassifizierende Text wird in Abhängigkeit von dem Vergleich einer derjenigen Klassen zugeordnet, der die Beispieltexte zugeordnet sind.

Erfindungsgemäß wird somit ein Schindel-Verfahren herangezogen, um einen Text automatisch zu klassifizieren. Durch diese Maßnahme wird das gesamte Verfahren in die Lage versetzt, selbst schwierige Texte korrekt zu klassifizieren. Auch Schreibfehler oder Schreibvarianten, die insbesondere in Emails häufig enthalten sind, führen bei dem erfindungsgemäßen Verfahren nicht zu Fehl-Klassifizierungen. Das Verfahren ist somit insgesamt sehr robust und gerade bei elektronischen Informationen, wie Emails und dergleichen, besonders vorteilhaft einsetzbar.

Von besonderer Bedeutung ist die Realisierung des erfindungsgemäßen Verfahrens in der Form eines Computerprogramms, das für ein Computersystem vorgesehen ist. Das Computerprogramm weist Programmcode auf, der dazu geeignet ist, das erfindungsgemäße Verfahren durchzuführen, wenn er auf dem Computersystem abläuft. Weiterhin kann der Programmcode auf einem Computerprogramm-Produkt gespeichert sein, beispielsweise auf einer Diskette oder einer Compact-Disc (CD). In diesen Fällen wird die Erfindung durch das Computerprogramm oder das Computerprogramm-Produkt realisiert, so dass dieses Computerprogramm und dieses Computerprogramm-Produkt in gleicher Weise die Erfindung darstellen wie das Verfahren, zu dessen Ausführung sie geeignet sind.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

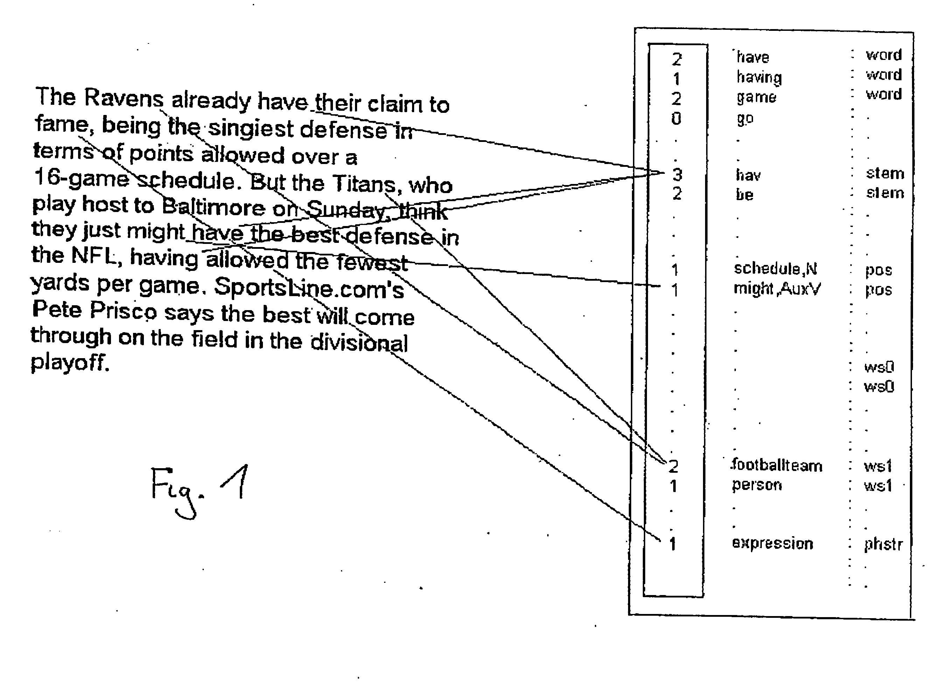

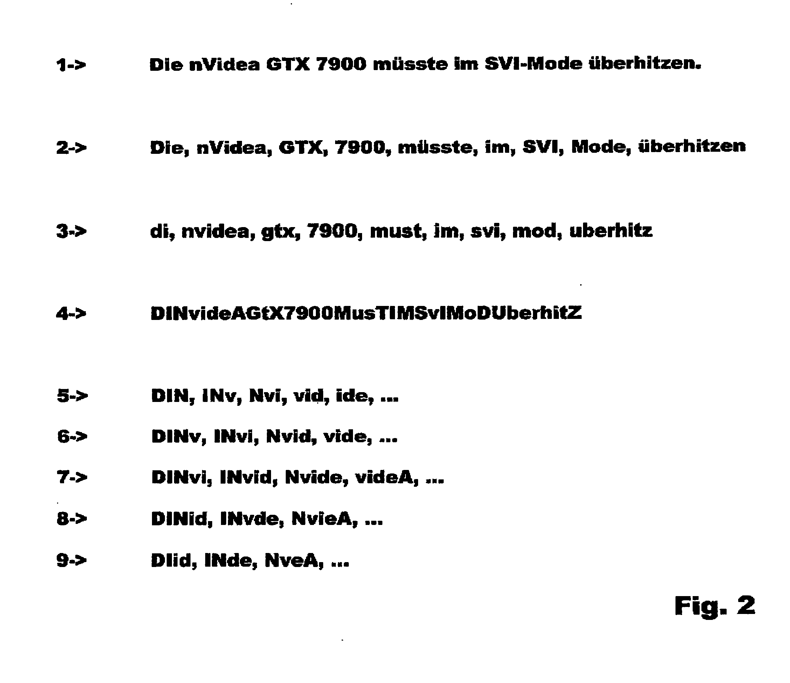

Figur 1 zeigt ein schematisches Blockdiagramm und Figur 2 zeigt eine Auflistung eines Ausführungsbeispiels eines erfindungsgemäßen Verfahrens zur Klassifizierung eines Textes durch ein Computersystem.

Elektronische Informationen, die bei einem Unternehmen auf irgend eine Art und Weise eingehen, und die beispielsweise Anfragen von Kunden zu Produkten oder Dienstleistungen des Unternehmens betreffen, müssen entweder automatisch beantwortet oder an den jeweils zuständigen Sachbearbeiter weitergeleitet werden. Bei derartigen elektronischen Informationen handelt es sich um Texte, die mittels elektronischer Medien übermittelt werden. Beispielsweise kann es sich um Emails, SMS (short message service) oder Beiträge zu einem Internet-Forum oder innerhalb eines Chat-Rooms handeln.

Zur Verarbeitung der elektronischen Informationen sind in einem Computersystem mehrere Klassen definiert, denen jeweils mindestens eine vorgegebene Antwort oder ein bestimmter Sachbearbeiter zugeordnet ist. Die Definition der Klassen ist abhängig von den zu erwartenden Anfragen und damit z.B. von den Produkten und Dienstleistungen des Unternehmens. In Abhängigkeit von diesen Klassen werden Beispieltexte kreiert, die für die jeweiligen Klassen als zu erwartende Anfragen sinnvoll sind.

So können beispielsweise Klassen definiert werden, die den Produkten des Unternehmens entsprechen, was zur Folge hat, dass die Beispieltexte sich auf diese Produkte beziehen. Ebenfalls können z.B. Klassen definiert werden, die bestimmten Abteilungen des Unternehmens entsprechen. Dies hat dann zur Folge, dass die Beispieltexte sich auf diese unterschiedlichen Abteilungen beziehen. Die einzelnen Beispieltexte werden dann den einzelnen Klassen zugeordnet. Dabei ist zu beachten, dass es sich vorliegend um Beispieltexte handelt, die bekannt sind, und die somit ohne weiteres aufgrund ihres jeweiligen Inhalts den Klassen zugeteilt werden können.

Der tatsächliche Text, der vorab nicht bekannt ist, und der beispielsweise in einer eingehenden Email oder SMS enthalten ist, wird von dem Computersystem automatisch einer der vorgegebenen Klassen zugeteilt. In Abhängigkeit von dieser Klassifizierung wird die Email oder SMS dann automatisch beantwortet oder an den für diese Klasse zuständigen Sachbearbeiter weitergeleitet.

Wie vorstehend genannt, müssen für die Klassifizierung eines Textes zuerst Klassen definiert werden. Hierzu werden eine Mehrzahl von Beispieltexten dem nachfolgenden, von dem Computersystem ausgeführten Verfahren unterzogen. Bei den Beispieltexten handelt es sich dabei letztlich um die vorstehend bereits angesprochenen, zu erwartenden Anfragen, die bei dem Unternehmen z.B. im Zusammenhang mit dessen Produkten und Dienstleistungen voraussichtlich eingehen.

Das nachfolgend erläuterte Verfahren setzt sich im wesentlichen aus zwei Teilen zusammen, die in den Figuren 1 und 2 schematisch dargestellt sind. Die beiden Teile sind grundsätzlich unabhängig voneinander und werden beispielsweise zeitlich nacheinander von dem Computersystem ausgeführt.

In der Figur 1 ist in der linken Hälfte ein Beispieltext angegeben, aus dem von dem Computersystem die in der rechten Hälfte der Figur 1 dargestellte Tabelle erzeugt wird. Zum Zwecke der Erläuterung betrifft der Beispieltext eine englischsprachige Reportage.

In jeder Zeile der Tabelle ist in der Mitte eine Information angegeben, die eines oder mehrere Wörter des Beispieltextes betrifft. Rechts davon ist die Eigenschaft dieser Information und links davon die Häufigkeit des Vorkommens dieser Information in dem Beispieltext angegeben.

Eine erste Eigenschaft ist in der Tabelle der Figur 1 mit "word" angegeben. Dabei handelt es sich um die einzelnen Wörter des Beispieltextes als solche. Die unterschiedlichen Wörter sind in den einzelnen Zeilen der Tabelle jeweils als Information unmittelbar angegeben. So betrifft die erste Zeile das Wort "have", das in dem Beispieltext die Häufigkeit "2" besitzt. Gemäß der zweiten Zeile ist das Wort "having" in dem Beispieltext mit der Häufigkeit "1" vorhanden. Das Wort "game" ist wieder zweifach vorhanden; und so weiter.

Auf diese Weise wird von dem Computersystem der gesamte Beispieltext in seine einzelnen Wörter zerlegt. Die einzelnen Wörter werden in der Tabelle unter der Eigenschaft "word" und mit ihrer jeweiligen Häufigkeit abgespeichert. Unter der Eigenschaft "word" können somit nur Wörter abgespeichert sein, die identisch auch in dem Beispieltext enthalten sind.

Eine zweite Eigenschaft ist in der Tabelle der Figur 1 mit "stem" angegeben. Dabei handelt es sich um Wortstämme, die in den einzelnen Wörtern des Beispieltextes enthalten sind. Die unterschiedlichen Wortstämme sind in den einzelnen Zeilen der Tabelle jeweils als Eigenschaft angegeben. So betrifft die Zeile mit dem Wortstamm "hav" die Wörter "have" und "having". Dieser Wortstamm hat in dem Beispieltext die Häufigkeit "3". Der Wortstamm "be" betrifft die Wörter "being" und "is" und "will" und dergleichen und ist in dem Beispieltext mit der Häufigkeit "2" enthalten. Und so weiter.

Wiederum wird von dem Computersystem der gesamte Beispieltext im Hinblick auf vorhandene Wortstämme verarbeitet, die dann in der Tabelle unter der Eigenschaft "stem" und mit der jeweiligen Häufigkeit abgespeichert werden. Dabei ist es möglich, dass der in der Tabelle abgespeicherte Wortstamm nicht identisch in dem Beispieltext enthalten ist, so z.B. bei dem Wortstamm "be", der z.B. nur in der Form des Wortes "will" in dem Beispieltext enthalten sein kann.

Eine dritte Eigenschaft ist in der Tabelle der Figur 1 mit "pos" angegeben. Dabei handelt es sich um die Wortart eines Wortes. Die Eigenschaft "pos" ist damit nicht satz-, sondern nur wortbezogen. So ergibt sich aus der ersten, zu der Eigenschaft "pos" in der Tabelle angegebenen Zeile, dass es sich bei dem Wort "schedule" um ein Substantiv (N = noun = englisch: Substantiv) handelt. Aus der zweiten, zu der Eigenschaft "pos" angegebenen Zeile ergibt sich, dass es sich bei dem Wort "might" um ein Hilfsverb (AuxV = auxiliary verb = englisch: Hilfsverb) handelt.

Das Computersystem verarbeitet den gesamten Beispieltext im Hinblick auf vorhandene Wortarten. Diese Wortarten speichert das Computersystem zusammen mit der Häufigkeit ihres Vorkommens in der Tabelle ab. Die vorstehend beispielhaft genannten Abkürzungen für die Wortarten werden dabei von dem Computersystem den jeweiligen Wörtern hinzugefügt und als Information in der Tabelle abgespeichert. Es versteht sich, dass für andere Wortarten entsprechende andere Abkürzungen vorhanden sind.

Weitere Eigenschaften sind in der Tabelle der Figur 1 mit "ws0", "ws1" ... "wsN" angegeben. Dabei handelt es sich um Synonyme von Wörtern. Diese Eigenschaften sind damit nicht satz-, sondern auf den Wortsinn bezogen.

Die Eigenschaften "ws0", "ws1" ... "wsN" unterscheiden sich im Hinblick auf ihre Stufe der Wort-Ontologie.

Bei der Eigenschaft "ws0" handelt es sich um Synonyme derselben Stufe der Wort-Ontologie. Hierzu gehören beispielsweise die Synonyme "regnen, gießen, schütten".

Bei der Eigenschaft "ws1" handelt es sich um Synonyme auf einer ersten übergeordneten Stufe der Wort-Ontologie. So gehört zu der ersten, die Eigenschaft "ws1" in der Tabelle der Figur 1 enthaltenden Zeile die Information "footballteam". Diese Information stellt ein Synonym dar für zwei, in dem Beispieltext angegebene Football-Mannschaften, nämlich die "Ravens" und die "Titans". Die Information "footballteam" ist deshalb ein Synonym auf einer ersten übergeordneten Stufe und ist mit der Häufigkeit "2" in dem Beispieltext enthalten. Zu der zweiten, die Eigenschaft "ws1" enthaltenden Zeile gehört die Information "person", die ein Synonym für eine Person darstellt, nämlich dem in dem Beispieltext genannten "Pete Prisco". Die Häufigkeit der Information "person" ist deshalb "1".

Weitere Synonyme höherer Stufen können in der Tabelle unter den Eigenschaften "ws2", "ws3" und so weiter bis "wsN" enthalten sein.

Auf diese Weise wird von dem Computersystem der gesamte Beispieltext verarbeitet. Dabei ist es möglich, dass dem Computersystem eine Vielzahl möglicher Synonyme unterschiedlicher Stufen zusammen mit deren Informationen vorgegeben werden. Die einzelnen Informationen werden von dem Computersystem dann zusammen mit ihren Häufigkeiten abgespeichert.

Eine weitere Eigenschaft ist in der Tabelle der Figur 1 mit "phstr" angegeben. Dabei handelt es sich um satzbezogene Informationen. Dies können Informationen dahingehend sein, ob es sich bei einem oder mehreren Wörtern des Beispieltextes um eine Nominalphrase, eine Verbalphrase oder eine Partizipphrase oder dergleichen handelt. Bei der Nominalphrase kann es sich z.B. um den Ausdruck "der graue Mond" handeln, bei der Verbalphrase um den Ausdruck "scheint gelb und grün" und bei der Partizipphrase um den Ausdruck "am mächtigen Himmel".

Ebenfalls können die Informationen angeben, ob es sich bei einem oder mehreren Wörtern des Beispieltextes um einen zusammengehörigen, idiomatischen Ausdruck handelt. So enthält die einzige, die Eigenschaft "phstr" betreffende Zeile der Tabelle der Figur 1 die Information "expression" und bezieht sich auf die Wörter "claim to fame". Dies bedeutet, dass es sich bei diesen Wörtern um einen zusammengehörigen idiomatischen Ausdruck handelt, nämlich um "claim to fame = englisch: Besonderheit".

Wiederum wird von dem Computersystem der gesamte Beispieltext im Hinblick auf vorhandene satzbezogene Informationen verarbeitet, die dann in der Tabelle unter der Eigenschaft "phstr" und mit der jeweiligen Häufigkeit abgespeichert werden. Als Information wird dabei nicht nur die jeweilige Art der satzbezogenen Information, also z.B. "expression", sondern auch diejenigen Wörter abgespeichert, auf die sich die satzbezogene Information bezieht.

Weiterhin können in der Tabelle der Figur 1 folgende Eigenschaften abgespeichert sein:
Eigenschaft "vf":
   Dabei handelt es sich um eine Angabe, aus der sich ergibt, auf welches andere Wort sich ein bestimmtes Verb des Beispieltextes bezieht. In der Tabelle ist dabei als Information das bestimmte Verb und das andere Wort des Beispieltextes zusammen mit der zugehörigen Häufigkeit des Auftretens in dem Beispieltext abgespeichert.
Eigenschaft "tr":
   Dabei handelt es sich um eine Angabe, "wer" in einem bestimmten Satz "was" tut. Als Information ist in der Tabelle abgespeichert, wer in dem bestimmten Satz eine aktive
   Rolle innehat, und was der Inhalt dieser Rolle ist.
Eigenschaft "kb":
   Dabei handelt es sich um einen Hinweis, aus dem hervorgeht, dass ein bestimmtes Wort des Beispieltextes in einer vorhandenen Datenbank enthalten ist. Die Datenbank wird vorab erstellt und enthält beispielsweise alle Produkte des Unternehmens. In diesem Fall handelt es sich somit um Produktdatenbank. In der Tabelle der Figur 1 ist dann als Information das bestimmte, in der Datenbank enthaltene Wort und dessen Häufigkeit des Auftretens in dem Beispieltext abgespeichert.
Eigenschaft "da":
   Dabei handelt es sich um sonstige Informationen. Dabei kann es sich ganz allgemein um semantische Informationen handeln, die gegebenenfalls sehr detailliert sein können.
   Zusammengefasst stellt nur die erste Eigenschaft "word" ein quantitatives Kriterium für die Klassifizierung des Beispieltextes dar. Alle anderen beschriebenen Eigenschaften sind qualitativer Art und beziehen sich immer auf die Inhalte der Wörter oder der Sätze des Beispieltextes.

Insgesamt entsteht damit zu dem vorliegenden Beispieltext eine Tabelle, wie sie in der Figur 1 dargestellt ist. Diese Tabelle stellt einen Vektor dar, der den betreffenden Beispieltext charakterisiert. Der Vektor eines bestimmten Beispieltextes enthält dabei entsprechend der Tabelle der Figur 1 eine Vielzahl von Eigenschaften, zugehörigen Informationen und zugehörigen Häufigkeiten.

In der Figur 2 ist in der ersten Zeile ein Beispieltext angegeben, der von dem Computersystem in mehreren Schritten zu sogenannten Zeichen-Schindeln - nachfolgend abgekürzt als Schindeln - verarbeitet wird.

Die Beispieltexte der Figuren 1 und 2 müssten an sich übereinstimmen, damit letztlich ein Ergebnisvektor erzeugt wird, der diesen übereinstimmenden Beispieltext charakterisiert. Es wird ausdrücklich darauf hingewiesen, dass vorliegend nur zum Zwecke der Erläuterung hiervor abgewichen wird. Der Beispieltext der Figur 2 betrifft deshalb eine Grafikkarte eines Computers und könnte beispielsweise als Email-Anfrage eines Käufers bzw. Nutzers bei dem Hersteller der Grafikkarte eingehen.

In einem ersten Schritt wird der gesamte Text von dem Computersystem in alphanumerische Zeichenketten zerlegt. Bei diesen Zeichenketten handelt es sich zumeist um einzelne Wörter oder Zahlen. Sonderzeichen, wie beispielsweise Leerzeichen oder Zeilen-/Absatzumbrüche oder Satz-/Wort-Trennzeichen, werden von dem Computersystem bei der Erstellung der Zeichenketten gelöscht. Die einzelnen alphanumerischen Zeichenketten werden durch vorgegebene Zeichen, beispielsweise durch ein Komma und/oder ein Leerzeichen, voneinander getrennt.

Wird dieser erste Schritt beispielhaft auf den Beispieltext der Figur 2 angewendet, so ergibt sich daraus die alphanumerische Zeichenkette, wie sie in der zweiten Zeile der Figur 2 angegeben ist. Beispielsweise sei darauf hingewiesen, dass in den sich ergebenden Zeichenketten der zweiten Zeile ist das Trennzeichen zwischen den Wörtern "SVI-Mode" nicht mehr vorhanden und auch der Punkt am Ende des Beispieltextes ist entfernt.

In einem zweiten Schritt wird der gesamte Text von dem Computersystem im Hinblick auf die Groß- und Kleinschreibung einer Normierung unterzogen. Dies bedeutet, dass sämtliche, aus dem ersten Schritt vorhandenen alphanumerischen Zeichenketten nur noch mit Kleinbuchstaben geschrieben werden. Die Großschreibung insbesondere am Anfang eines Wortes wird damit aufgehoben.

In einem dritten Schritt werden bestimmte Zeichen der Zeichenkette durch andere Zeichen ersetzt. Diese Ersetzung ist sprachabhängig. In der deutschen Sprache des vorliegenden Beispieltextes können beispielhaft die folgenden Ersetzungen vorgenommen werden: ä -> a; ae -> a; ü -> u; ue -> u; ö -> o; oe -> o; β -> s; ss -> s; ph -> f; y -> i.

Weiterhin werden in dem dritten Schritt bestimmte Buchstaben an den Enden eines Wortes entfernt. Dieses Entfernen von Buchstaben ist wiederum sprachabhängig. In der deutschen Sprache des Beispieltextes können beispielhaft die folgenden End-Buchstaben gelöscht werden: -s, -e, -e, -en.

Die Anwendung des zweiten und des dritten Schrittes auf den Beispieltext der Figur 2 führt zu den in der dritten Zeile der Figur 2 angegebenen Zeichenketten. Wie erwähnt, sind in dieser dritten Zeile keine Großbuchstaben mehr vorhanden und es sind bestimmte Buchstaben verändert oder gelöscht. So ist in der sich ergebenden Zeichenkette der dritten Zeile das "-e" bei der Zeichenkette "di" nicht mehr vorhanden oder das Wort "müsste" ist in die Zeichenkette "must" verändert worden. Ähnliches gilt für die Wörter "Mode" und "überhitzen".

In einem vierten Schritt wird der gesamte Text von dem Computersystem im Hinblick auf vorhandene Grenzen codiert. Ausgangspunkt sind dabei die einzelnen, in der dritten Zeile der Figur 2 nacheinander vorhandenen Zeichenketten. Die bisher noch vorgenommene Trennung dieser einzelnen Zeichenketten, die beispielhaft mit Hilfe eines Kommas und/oder eines Leerzeichens erfolgt ist, wird nunmehr aufgehoben und durch eine Codierung ersetzt.

Im vorliegen Ausführungsbeispiel der Figur 2 wird jede Grenze dadurch codiert, dass immer das erste und das letzte Zeichen einer Zeichenkette als Großbuchstaben geschrieben wird. Bei Zahlen wird diese Codierung nicht angewendet. Das bisher vorhandene Komma und/oder Leerzeichen wird dann - wie gesagt - weggelassen. Es wird darauf hingewiesen, dass die erzeugten Großbuchstaben nichts mit der bekannten Groß- und Kleinschreibung von Wörtern zu tun haben, sondern völlig unabhängig davon zur Codierung von Grenzen aufeinanderfolgender Zeichenketten verwendet werden.

Dieser vierte Schritt führt bei dem Beispieltext der Figur 2 zu der in der vierten Zeile der Figur 2 angegebenen Abfolge alphanumerischer Zeichen. Dabei sind die ersten beiden Buchstaben "D" und "I" groß geschrieben, da es sich dabei um das erste und letzte Zeichen der Zeichenkette "di" handelt. Entsprechendes gilt für die beiden Buchstaben "N" und "A", bei denen es sich um das erste und letzte Zeichen der Zeichenkette "nvidea" handelt, oder für die beiden Buchstaben "U" und "Z", bei denen es sich um das ersten und letzte Zeichen der Zeichenkette "uberhitz" handelt.

In einem fünften Schritt werden nunmehr von dem Computersystem die bereits erwähnten Schindeln erzeugt. Dies erfolgt dadurch, dass die aus dem vierten Schritt hervorgegangene Abfolge alphanumerischer Zeichen auf bestimmte vorgegebene Arten zerlegt werden.

Bei 3er-Schindeln werden immer drei aufeinanderfolgende Zeichen der genannten Abfolge zusammengefasst. Begonnen wird dabei mit dem ersten, zweiten und dritten Zeichen der Abfolge, aus denen eine erste 3er-Schindel erzeugt wird. Dann wird aus dem zweiten, dritten und vierten Zeichen eine zweite 3er-Schindel erzeugt. Fortgesetzt wird diese Vorgehensweise mit dem dritten, vierten und fünften Zeichen der genannten Abfolge; und so weiter. Die entstehenden, aufeinanderfolgenden 3er-Schindeln sind in der fünften Zeile der Figur 2 angegeben.

Bei 4er-Schindeln werden immer vier aufeinanderfolgende Zeichen der Abfolge alphanumerischer Zeichen zusammengefasst. Die Vorgehensweise entspricht dabei der bereits erläuterten Vorgehensweise bei 3er-Schindeln. Die entstehenden, aufeinanderfolgenden 4er-Schindeln sind in der sechsten Zeile der Figur 2 angegeben.

In der siebten Zeile der Figur 2 sind 5er-Schindeln angegeben, die auf eine entsprechende Weise erzeugt werden, wie dies für die 3er- und 4er-Schindeln bereits erläutert wurde.

In der achten Zeile der Figur 2 sind sogenannte 3-1-2er-Schindeln angegeben. Diese werden von dem Computersystem dadurch erzeugt, dass immer drei aufeinanderfolgende Zeichen der in der vierten Zeile der Figur 2 angegeben Abfolge alphanumerischer Zeichen ausgewählt werden, dass dann ein Zeichen der Abfolge ausgelassen wird, und dass schließlich die nächsten beiden Zeichen wieder ausgewählt werden. Dies wird in gleicher Weise wiederholt, wie dies im Zusammenhang mit den 3er-Schindeln bereits erläutert wurde.

Entsprechendes gilt für die in der neunten Zeile der Figur 2 angegebenen sogenannten 2-2-2er-Schindeln. Hier werden also zwei Zeichen der genannten Abfolge ausgewählt, dann werden zwei Zeichen ausgelassen, und dann werden wieder zwei Zeichen ausgewählt.

Die in den fünften bis neunten Zeilen der Figur 2 angegebenen Schindeln sind somit alle das Ergebnis des fünften Schrittes. Es versteht sich, dass auch andere und/oder weitere Schindeln von dem Computersystem erzeugt werden können.

In einem sechsten Schritt werden schließlich alle sich ergebenden Schindeln aufgelistet und zu jeder vorhandenen Schindel ermittelt das Computersystem eine zugehörige Häufigkeit in dem untersuchten Beispieltext. Die entstehende Tabelle stellt einen Vektor dar, der den betreffenden Beispieltext charakterisiert. Der Vektor eines bestimmten Beispieltextes enthält dabei - wie erwähnt - eine Vielzahl von Schindeln mit zugehörigen Häufigkeiten.

Entsprechend den vorstehenden Erläuterungen sind nunmehr zwei Vektoren vorhanden, die jeweils einen Beispieltext charakterisieren. Da es sich - wie bereits erwähnt wurde - an sich um denselben Beispieltext handelt, charakterisieren die beiden Vektoren diesen übereinstimmenden Beispieltext.

Die beiden Vektoren werden zu einem Ergebnisvektor zusammengefasst. Da der übereinstimmende Beispieltext bekannt ist, kann dieser Ergebnisvektoren derjenigen Klasse zugeordnet werden, zu der der vorliegende übereinstimmende Beispieltext gehört. Der Ergebnisvektor charakterisiert damit nicht nur den Beispieltext, sondern auch die Klasse, der der Beispieltext zugeordnet ist.

Die erläuterte Ermittlung des Ergebnisvektors wird nunmehr auf eine Mehrzahl unterschiedlicher Beispieltexte angewendet und die Ergebnisvektoren werden den jeweils betreffenden Klassen zugeordnet. Von dem Computersystem werden auf diese Weise für jede der vorhandenen Klassen eine Mehrzahl von Ergebnisvektoren erzeugt, die zu den jeweiligen Klassen gehören und diese jeweils charakterisieren.

Der gesamte, bisher beschriebene Vorgang erfolgt vor der eigentlichen Klassifizierung eines tatsächlichen Textes und dient einzig der Erstellung einer Wissensbasis, auf deren Grundlage später die für eine vorzunehmende Klassifizierung erforderlichen Entscheidungen getroffen werden. Dieser vorher ablaufende Vorgang wird deshalb auch als maschinelle Lernphase oder off-line-Phase bezeichnet. Das danach ablaufende Klassifizieren von tatsächlichen Texten wird als on-line-Phase bezeichnet.

Ein in der on-line-Phase zu klassifizierender Text wird auf dieselbe Art und Weise von dem Computersystem verarbeitet wie dies im Zusammenhang mit den Beispieltexten erläutert wurde. Es wird also für den zu klassifizierenden tatsächlichen Text ein Ergebnisvektor erstellt, wie dies anhand der Figuren 1 und 2 erläutert wurde.

Der Ergebnisvektor des zu klassifizierenden Textes wird mit den Ergebnisvektoren der Beispieltexte verglichen. In Abhängigkeit von diesem Vergleich wird der zu klassifizierende tatsächliche Text einer der vorab definierten Klassen zugeteilt.

Dies kann auf unterschiedliche Arten erfolgen.

Bei einer ersten Klassifikationsart, dem sogenannten "lazy learning", wird jedem Ergebnisvektor der Beispieltexte zumindest eine Klasse zugeordnet. Verschiedene Ergebnisvektoren können gleichen Klassen zugeordnet sein. Der neue Ergebnisvektor des zu klassifizierenden Textes wird mit allen vorhandenen Ergebnisvektoren verglichen. Der neue Ergebnisvektor wird dann derjenigen Klasse zugeteilt, die demjenigen Ergebnisvektor der Beispieltexte zugeordnet ist, der dem neuen Ergebnisvektor am ähnlichsten ist.

Bei einer zweiten Klassifikationsart, der sogenannten "support vector machine (SVM)" werden zusammengehörige Beispieltexte und deren zugehörige Ergebnisvektoren in eine gemeinsame Klasse eingeordnet. Zwischen den Klassen werden Grenzen ermittelt, so dass jede Klasse einen abgegrenzten Bereich des gesamten Vektorraums einnimmt. Für den neuen Ergebnisvektor wird dann ermittelt, in welchem dieser abgegrenzten Bereiche er sich befindet. Der neue Ergebnisvektor und damit der zu klassifizierende Text wird dann derjenigen Klasse zugeteilt, die demjenigen Bereich entspricht, in dem sich der neue Ergebnisvektor befindet.

Bei einer dritten Klassifikationsart, dem sogenannten "symbolic eager learning", wird auf der Grundlage der aus den Beispieltexten erstellten Ergebnisvektoren ein Entscheidungsbaum bzw. entsprechende Entscheidungsregeln erstellt. Jedem Blatt des Entscheidungsbaums ist eine bestimmte Klasse zugeordnet. Für den zu klassifizierenden Text wird dann dieser Entscheidungsbaum in Abhängigkeit von dem neu erstellten Ergebnisvektor durchlaufen. Daraus ergibt sich dann diejenige Klasse, die dem zu klassifizierenden tatsächlichen Text zuzuordnen ist.

Bei einer vierten Klassifikationsart, den sogenannten neuronalen Netzwerken, werden die erzeugten Ergebnisvektoren mathematischen Operationen unterzogen, aus denen dann auf die jeweils zugehörigen Klassen geschlossen wird.

Unabhängig von der gewählten Klassifikationsart wird von dem Computersystem automatisch von dem für einen zu klassifizierenden tatsächlichen Text erstellten Ergebnisvektor auf eine bestimmte Klasse geschlossen, der der zu klassifizierende Text dann zugeordnet wird.

Bei dem eingangs beispielhaft genannten Unternehmen, bei dem eingehende Emails automatisch beantwortet werden sollen oder dem jeweils zuständigen Sachbearbeiter zugeteilt werden sollen, ist nunmehr jeder Klasse zumindest eine vorgegebene Antwort oder ein zuständiger Sachbearbeiter zugeordnet. Nachdem der tatsächliche Text einer eingehenden Email von dem Computersystem automatisch einer bestimmten Klasse zugeteilt worden ist, ist es damit möglich, die Email automatisch zu beantworten oder an den zuständigen Sachbearbeiter weiterzuleiten.

Bei dem erläuterten Verfahren können folgende Abwandlungen oder Ergänzungen vorgenommen werden:

Die beiden anhand der Figuren 1 und 2 beschriebenen Teile des Verfahrens können auch zeitlich parallel zueinander ausgeführt werden. Ebenfalls können die beiden Teile verteilt auf mehreren Computersystemen ausgeführt werden.

Bei der Erstellung der Vektoren ist es auch möglich, dass bei dem gemäß der Figur 1 beschriebenen Teil des Verfahrens jeder Eigenschaft eine Nummer zugeordnet ist, und dass der zu erstellende Vektor mit Hilfe dieser Nummern aufgebaut wird. Entsprechend ist es bei dem gemäß der Figur 2 beschriebenen Teil des Verfahrens möglich, dass jeder Schindel eine Nummer zugeordnet ist, und dass der zu erstellende Vektor mit Hilfe dieser Nummern aufgebaut wird.

Bei beiden Teilen des Verfahrens ist es möglich, dass die verschiedenen Eigenschaften und/oder die verschiedenen Schindeln unterschiedlich gewichtet werden. So kann bestimmten Schindeln ein höheres Gewicht zugeordnet werden als anderen Schindeln. Diese unterschiedliche Gewichtung kann beispielsweise dadurch realisiert werden, dass bei den beiden Teilen des Verfahrens nicht nur jeweils ein Vektor erstellt wird, sondern dass für alle Eigenschaften und/oder Schindeln mit gleichem Gewicht jeweils ein separater Vektor auf die beschriebene Weise erzeugt wird. Die Klassifizierung kann dann jeweils durch einen Vergleich von Vektoren mit gleichem Gewicht erfolgen. Aus den Ergebnisse dieser Klassifizierungen kann anhand der Gewichte eine abschließende Klassifizierung abgeleitet werden.

Weiterhin ist es möglich, dass die beiden Teile des beschriebenen Verfahrens unterschiedlich gewichtet werden. Es ist also möglich, dass dem gemäß der Figur 2 erläuterten zweiten Teil ein größeres Gewicht zugeordnet wird als dem ersten Teil der Figur 1. In diesem Fall können die beiden erstellten Vektoren jeweils unabhängig von einander klassifiziert werden und das Ergebnis kann dann anhand der Gewichtung zu einer abschließenden Klassifizierung verarbeitet werden.

Bei dem zweiten Teil des erläuterten Verfahrens kann ergänzend ein Verfahren zum Einsatz kommen, mit dem eine bestmögliche Kombination von Schindeln ermittelbar ist. Beispielsweise kann hierzu ein sogenanntes Meta-Lernverfahren wie "AdaBoost" verwendet werden. Mit Hilfe eines derartigen Verfahrens können beispielsweise 4er- und 5er-Schindeln zu einem neuen, eigenständigen Klassifikator zusammengefasst werden oder es können beispielsweise 3er-Schindeln nur zum Zwecke der Sprachidentifikation eingesetzt werden.

## Patentansprüche

1. Verfahren zum automatischen Klassifizieren eines Textes, der in einer eingehenden elektronischen Information enthalten ist, durch ein Computersystem, wobei das Verfahren die folgenden Schritte aufweist:
- es wird mindestens eine qualitative Eigenschaft mindestens eines Wortes des zu klassifizierenden Textes ermittelt,
- es wird die Häufigkeit des Vorkommens der qualitativen Eigenschaft in dem zu klassifizierenden Text ermittelt,
- es wird der zu klassifizierende Text in eine Abfolge alphanumerischer Zeichen umgewandelt,
- es wird die Abfolge alphanumerischer Zeichen auf mindestens eine vorgegebene Weise in eine sogenannte Zeichen-Schindel zerlegt,
- es wird die Häufigkeit des Vorkommens der Zeichen-Schindel in dem zu klassifizierenden Text ermittelt,
- es wird aus der qualitativen Eigenschaft und der zugehörigen Häufigkeit sowie aus der Zeichen-Schindel und der zugehörigen Häufigkeit ein Vektor gebildet,
- es wird der ermittelte Vektor mit vorab anhand von bekannten Beispieltexten auf gleiche Weise ermittelten Vektoren verglichen, wobei jeder der Beispieltexte einer Klasse zugeordnet ist, und
- es wird der zu klassifizierende Text in Abhängigkeit von dem Vergleich einer derjenigen Klassen zugeordnet, der die Beispieltexte zugeordnet sind.

2. Verfahren nach Anspruch 1, wobei bei der Umwandlung des zu klassifizierenden Textes in eine Abfolge alphanumerischer Zeichen vorgegebene Sonderzeichen, wie beispielsweise Leerzeichen oder Zeilen-/Absatzumbrüche oder Satz-/Wort-Trennzeichen, gelöscht werden.

3. Verfahren nach einem der Ansprüche 1 oder 2, wobei bei der Umwandlung des zu klassifizierenden Textes in eine Abfolge alphanumerischer Zeichen die Großschreibung insbesondere am Anfang eines Wortes aufgehoben wird.

4. verfahren nach einem der Ansprüche 1 bis 3, wobei bei der Umwandlung des zu klassifizierenden Textes in eine Abfolge alphanumerischer Zeichen bestimmte Zeichen durch andere Zeichen ersetzt werden, beispielsweise wie folgt: ä -> a; ae -> a; ü -> u; ue -> u; ö -> o; oe -> o; β -> s; ss -> s; ph -> f; y -> i.

5. Verfahren nach einem der Ansprüche 1 bis 4, wobei bei der Umwandlung des zu klassifizierenden Textes in eine Abfolge alphanumerischer Zeichen bestimmte Buchstaben an den Enden eines Wortes entfernt werden, beispielsweise -s, -e, -e, -en.

6. Verfahren nach einem der Ansprüche 1 bis 5, wobei bei der Umwandlung des zu klassifizierenden Textes in eine Abfolge alphanumerischer Zeichen der gesamte Text im Hinblick auf vorhandene Grenzen codiert wird, beispielsweise **dadurch**, dass immer das erste und das letzte Zeichen einer einem Wort des Textes entsprechenden Zeichenkette als Großbuchstaben geschrieben wird.

7. Verfahren nach einem der Ansprüche 1 bis 6, wobei bei der Zerlegung der Abfolge alphanumerischer Zeichen in eine sogenannte Zeichen-Schindel immer eine vorgegebene Anzahl aufeinanderfolgende Zeichen der genannten Abfolge zusammengefasst werden.

8. Verfahren nach einem der Anspruch 7, wobei bei der Zusammenfassung aufeinanderfolgender Zeichen mindestens ein Zeichen der Abfolge ausgelassen wird.

9. Verfahren nach einem der Ansprüche 7 oder 8, wobei die Zusammenfassung aufeinanderfolgender Zeichen über gegebenenfalls codierte Grenzen des Textes hinweg durchgeführt wird.

10. Verfahren nach einem der Ansprüche 7 bis 9, wobei eine bestmögliche Kombination von Schindeln ermittelt wird.

11. Verfahren nach einem der vorstehenden Ansprüche, wobei eine Gewichtung von Vektoren durchgeführt wird.

12. Computerprogramm mit Programmcode zur Durchführung des Verfahrens nach einem der Ansprüche 1 bis 11, wenn der Programmcode auf einem Computersystem abläuft.

13. Computerprogramm-Produkt mit auf einem maschinenlesbaren Datenträger gespeicherten Programmcode zur Durchführung des Verfahrens nach einem der Ansprüche 1 bis 11, wenn der Programmcode des Computerprogramm-Produkts auf einem Computersystem abläuft.

14. Computersystem zum automatischen Klassifizieren eines Textes, der in einer eingehenden elektronischen Information enthalten ist, wobei ein Computerprogramm nach Anspruch 12 oder ein Computerprogramm-Produkt nach Anspruch 13 vorhanden ist
